# EUROPEAN PATENT APPLICATION

(11) **EP 3 820 106 A1**
(43) Date of publication of application: **12.05.2021**
(21) Application number: 19382975.1
(22) Date of filing: 07.11.2019
(51) Int. Cl.: H04L 29/06, H04L 12/24, H04W 4/50

(54) **METHOD AND APPARATUS FOR PROVISIONING OF INTERNET DEVICES**

(71) Applicant: Nokia Solutions and Networks Oy, 02610 Espoo (FI)
(72) Inventor: Grealish, Colin, Bristol, BS32 4UF (GB); Morales, Gracia, 28015 Madrid (ES)
(74) Representative: Balder IP Law, S.L.

(57) **Abstract**

Network equipment has at least one memory and processor which perform: storing an association between a mobile subscription of a mobile communication network of a mobile operator and a subscription owner; detecting a request from a cellular communication enabled device for providing data connectivity to a restricted network resource to which the subscription owner is authorized to access; and detecting whether the cellular communication enabled device transmitted the request using the subscription for which the association was stored between the mobile subscription and the subscription owner; and if yes, providing the data connectivity to the restricted network resource, otherwise not providing the data connectivity to the restricted network resource.

## Description

### TECHNICAL FIELD

Various example embodiments relate to provisioning of Internet devices.

### BACKGROUND

This section illustrates useful background information without admission of any technique described herein representative of the state of the art.

Internet devices can be provisioned with desired information, such as access data for a host system. Such provisioning may remove the need of manually entering data, which can be a difficulty with Internet devices that either lack a user interface or that are difficult to access. The provisioning is typically needed when a new Internet device is deployed, but may also become necessary, for example, in case a software/firmware/eSIM update clears already provided provisioning or makes it non-compatible with changes caused by the update.

It is sometimes desired to provision the Internet devices with host systems intended to be restricted to only given Internet devices, such as the own devices of an organization, hereinafter enterprise devices regardless of that whether the organization is a commercial or non-commercial or, e.g., governmental organization. In order to so restrict the provisioning, the enterprise devices must be authenticated prior to the provisioning. To this end, there are various solutions such as:
- Use of certificates, although the use of certificates is not always possible with Internet devices because there may not be sufficient resources in all Internet devices for the certificate exchange. For example, some Internet devices may passively powered RFID units that obtain their operating power from a radio transmission of an RFID reader, or the processing and memory may be minimized for maximizing battery life time in battery operated Internet devices. Also deployment and management of certificates takes an effort and incur costs.
- Integration into the Device Manufacturer or Delivery systems such that as devices are created their credentials are automatically provisioned in the serving systems. However, as there are a range of manufacturers without a common specification for such integration, this solution adds complexity and hinders sourcing from more than one vendors.
- Use of SIM based authentication techniques such as the AP-SIM and GBA (Generic Bootstrap Architecture). Such solutions, however, rely on multiple protocols in a device and also require bandwidth and other resources for the exchange in amounts exceeding those available in some use scenarios, particularly so with constrained Internet of Things (IoT) devices.

In this document, an IoT device refers to a device capable of providing things with unique identifiers or mobile subscription identifiers and the ability of data transfer over a network without human-to-human or human-to-computer interaction.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first example aspect of the present invention, there is provided a method comprising:
storing an association between a mobile subscription of a mobile communication network of a mobile operator and a subscription owner;
detecting a request from a cellular communication enabled device for providing data connectivity to a restricted network resource to which the subscription owner is authorized to access; and
detecting whether the cellular communication enabled device transmitted the request using the subscription for which the association was stored between the mobile subscription and the subscription owner; and if yes, providing the data connectivity to the restricted network resource, otherwise not providing the data connectivity to the restricted network resource.

The association may be stored by storing a subscription identifier unique to the subscription in connection with an identification of the subscription owner.

The subscription owner need not be jointly controlled with the mobile operator.

The providing of the data connectivity to the restricted network resource may comprise provisioning the cellular communication enabled device with access credentials.

The providing of the data connectivity to the restricted network resource may comprise routing traffic from the cellular communication enabled device to the restricted network resource.

The restricted network resource may comprise a server.

The restricted network resource may comprise an intranet of an organization to which the subscription owner is authorized to access. The owner of the subscription may be the organization.

The cellular communication enabled device may be configured to using 3GPP Non-IP protocol. Alternatively, or additionally the cellular communication enabled device may be configured to using LORAWAN protocol. Alternatively, or additionally the cellular communication enabled device may be configured to using Sigfox protocol.

The method may further comprise receiving a dynamic host configuration request. The method may further comprise providing the cellular communication enabled device with an address of a connectivity server in response to receiving the dynamic host configuration request. The address of the connectivity server may be provided in a dynamic host configuration response. The address of the connectivity server may be an IP address. The address of the connectivity server may be a uniform resource locator.

The method may further comprise providing connectivity server with information particular relating to the cellular communication enabled device. The information relating to the cellular communication enabled device may comprise a current IP address assigned by the mobile network to the mobile subscription. The information relating to the cellular communication enabled device may comprise the subscription identifier unique to the subscription that is associated with the cellular communication enabled device.

The connectivity server may perform the detecting of the request from the cellular communication enabled device for providing data connectivity to the restricted resource. The connectivity server may perform the detecting whether the cellular communication enabled device transmitted the request using the subscription for which the association was stored between the mobile subscription. The connectivity server may check that the cellular communication enabled device and the connectivity server are attached to a same network of the mobile operator. The connectivity server may verify the information relating to the cellular communication enabled device. The connectivity server may verify the information relating to the cellular communication enabled device using the Internet address of the cellular communication enabled device to look up at least one subscriber identifier of the mobile subscription.

The method may further comprise forming of the network subscription. The forming of the network subscription may comprise establishing a shared secret. The forming of the mobile communication network subscription may comprise storing the shared secret in a subscriber module. The subscriber module may be physical. Alternatively, the subscriber module may be an electric subscriber module that is remotely configured. The remotely configuring of the in the subscriber module may be performed when the cellular communication enabled device communicates with the mobile network using the network subscription.

The forming of the mobile communication network subscription may comprise establishing the subscription identifier such that the subscription identifier is unique in the mobile communication network. The subscription identifier may be an identifier that is cryptographically protected or not to be transmitted from the cellular communication enabled device.

According to a second example aspect of the present invention, there is provided network equipment comprising at least one memory and processor configured to perform the method of the first example aspect.

According to a third example aspect of the present invention, there is provided a method in a cellular communication enabled device comprising:
cooperating with a subscriber identity module provided to the cellular communication enabled device;
attaching to a cellular network;
obtaining an address or pointer to a connectivity server from an internet connectivity configuration server of the cellular network;
requesting connectivity from the connectivity server using the address or pointer; and
exchanging information with a restricted network resource over the connectivity server or obtaining access credentials and gaining access to the restricted network resource using the obtained access credentials.

According to a fourth example aspect of the present invention, there is provided cellular communication enabled device comprising at least one memory and processor configured to perform the method of the third example aspect.

According to a fifth example aspect of the present invention, there is provided a computer program comprising computer executable program code configured to execute any method of the first or third example aspect.

The computer program may be stored in a computer readable memory medium.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

According to a sixth example aspect of the present invention, there is provided a system comprising the network equipment of the second example aspect and the cellular communication enabled device.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows a block diagram of a cellular communication enabled device of an example embodiment;
Fig. 3 shows a block diagram of an apparatus of an example embodiment.
Figs. 4A and 4B show a flow chart of a process of an example embodiment; and
Fig. 5 shows a method of an example embodiment in the cellular communication enabled device.

### DETAILED DESCRIPTON OF THE DRAWINGS

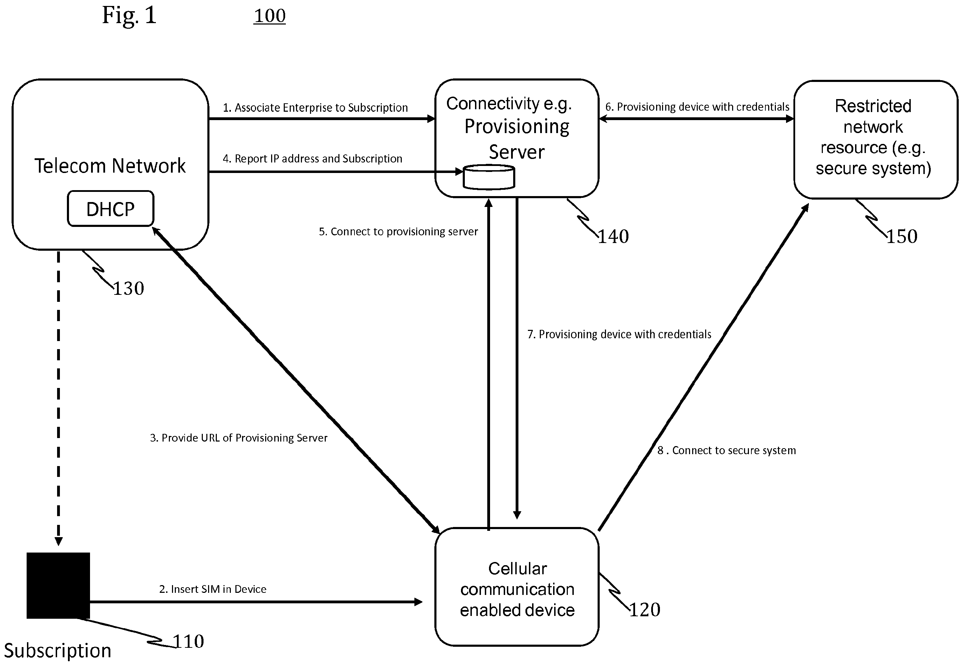

An example embodiment of the present invention and its potential advantages are understood by referring to Figs. 1 through 4 of the drawings. In this document, like reference signs denote like parts or steps.

Fig. 1 shows an architectural drawing of a system 100 of an example embodiment. The system 100 comprises a mobile subscription 110 of a mobile communication network, such as a cellular network (e.g., W-CDMA, LTE, 5G, CDMA-2000); a cellular communication enabled device 120 capable of receiving the mobile subscription 110 either physically or electronically (in case of electronic SIM or USIM, for example); a telecommunication network or mobile communication network 130 of a mobile operator (that provides connectivity for the mobile subscription 110); a connectivity server 140 such as a provisioning server or a routing or gateway server for routing traffic between the cellular communication enabled device 120 and a restricted network resource 150 such as a secure system.

In an embodiment, equipment of the mobile operator verifies authorization of the cellular communication enabled device 120 based on all of: stored association between an owner of a mobile subscription used by the cellular communication enabled device 120; and information received from the cellular communication enabled device 120 provided with the mobile subscription to the cellular communication enabled device 120. On positive authorization, the equipment of the mobile operator may provision the cellular communication enabled device 120 with information that enables the cellular communication enabled device 120 to access the restricted network resource 150. In another example embodiment, the equipment routes, responsively to the positive authorization, data between the cellular communication enabled device 120 and the restricted network resource.

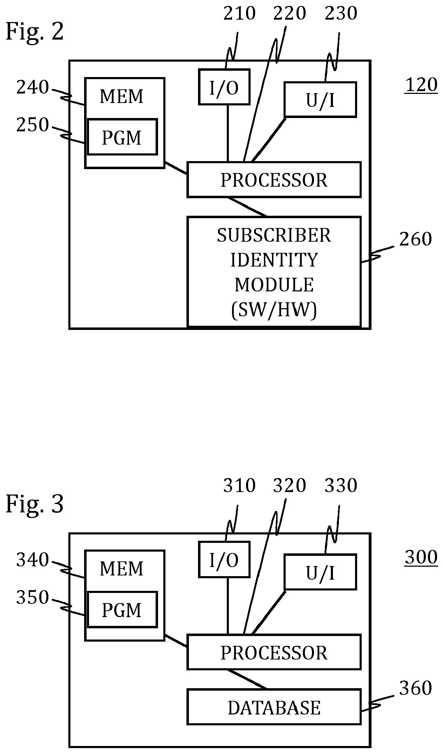

Fig. 2 shows a block diagram of the cellular communication enabled device 120. Fig. 2 shows an input/output interface configured to enable input and output of information; at least one processor 220 each with one or more cores, here referred to a processor as if formed of single element although this like other elements may be also distributed, virtualized and/or cloud computing implemented; a user interface (optional); a memory 240, typically including random access and persistent storages; computer program code 250 for controlling operation of the cellular communication enabled device 120 when executed by the processor 220; and a subscriber identity module 260 when loaded to the cellular communication enabled device 120. The subscriber identity module 260 can be a physical thing, such as a smart card implemented with an UICC card to host a SIM or USIM or other subscriber identity module, or an electronic thing, such as over-the-air -updateable subscriber identity module. The subscriber identity module 260 enables the cellular communication enabled device 120 to access and use the mobile network 130 to establish mobile connectivity.

Fig. 3 shows a block diagram of an apparatus 300 according to an embodiment of the invention. The apparatus 300 may be suited for implementing the connectivity server or for operating as equipment of the mobile operator suited for implementing some example embodiments. In the latter case, the equipment need not contain all the different functionalities of the mobile operator's network.

The apparatus 300 comprises a memory 340 including a persistent computer program code 350. The apparatus 300 further comprises a processor 320 for controlling the operation of the apparatus 300 using the computer program code 340, a communication unit 310 for communicating with other. The communication unit 310 comprises, for example, a local area network (LAN) port; a wireless local area network (WLAN) unit; Bluetooth unit; cellular data communication unit; or satellite data communication unit.

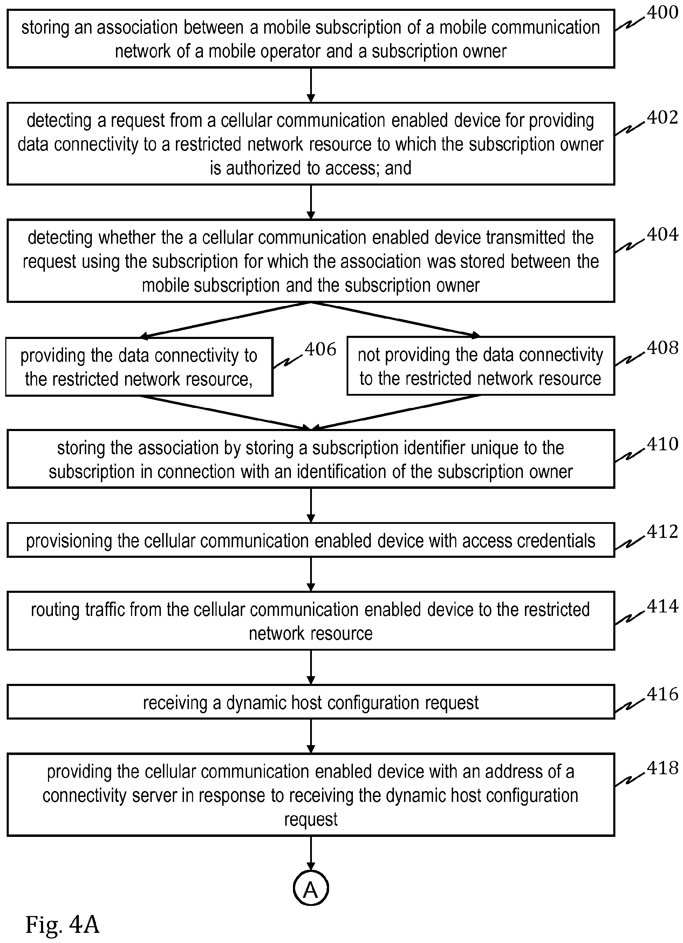

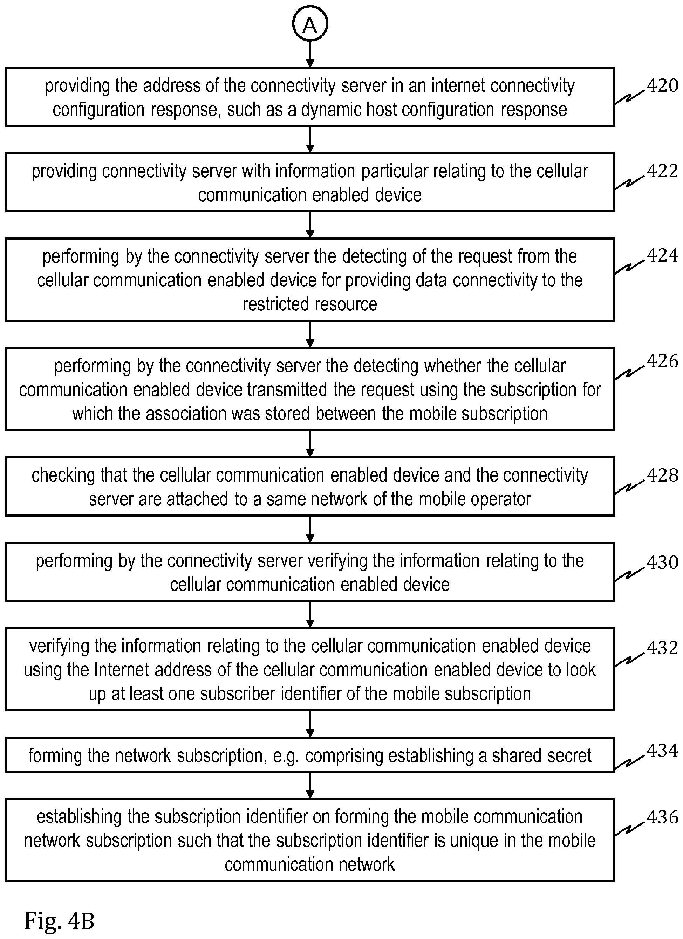

Fig. 4 shows a flow chart of a process of an example embodiment, comprising any one or more of:
400. storing an association between a mobile subscription of a mobile communication network of a mobile operator and a subscription owner;
402. detecting a request from a cellular communication enabled device for providing data connectivity to a restricted network resource to which the subscription owner is authorized to access; and
404. detecting whether the cellular communication enabled device 120 transmitted the request using the subscription for which the association was stored between the mobile subscription and the subscription owner; and if yes, providing 406. the data connectivity to the restricted network resource, otherwise not providing 408. the data connectivity to the restricted network resource.
   storing 410. the association by storing a subscription identifier unique to the subscription in connection with an identification of the subscription owner;

The subscription owner need not be jointly controlled with the mobile operator.

The providing of the data connectivity to the restricted network resource may comprise provisioning 412. the cellular communication enabled device with access credentials.

The providing of the data connectivity to the restricted network resource may comprise routing 414. traffic from the cellular communication enabled device to the restricted network resource.

The restricted network resource may comprise a server.

The restricted network resource may comprise an intranet of an organization to which the subscription owner is authorized to access. The owner of the subscription may be the organization.

The cellular communication enabled device may be configured to use 3GPP Non-IP protocol. Alternatively, or additionally the cellular communication enabled device may be configured to use LORAWAN protocol. Alternatively, or additionally the cellular communication enabled device may be configured to use Sigfox protocol.

The method may further comprise receiving 416. a dynamic host configuration request. The method may further comprise providing 418. the cellular communication enabled device with an address of a connectivity server in response to receiving the dynamic host configuration request. In an example embodiment, the method further comprises providing 420. the address of the connectivity server in an internet connectivity configuration response, such as a dynamic host configuration response. The address of the connectivity server may be an IP address. The address of the connectivity server may be a uniform resource locator.

In an example embodiment, the method further comprises providing 422. the connectivity server with information particular relating to the cellular communication enabled device. The information relating to the cellular communication enabled device may comprise a current IP address assigned by the mobile network to the mobile subscription. The information relating to the cellular communication enabled device may comprise the subscription identifier unique to the subscription that is associated with the cellular communication enabled device.

In an example embodiment, the method further comprises performing 424. by the connectivity server the detecting of the request from the cellular communication enabled device for providing data connectivity to the restricted resource. In an example embodiment, the method further comprises performing 426. by the connectivity server the detecting whether the cellular communication enabled device transmitted the request using the subscription for which the association was stored between the mobile subscription. In an example embodiment, the connectivity server performs 428. checking that the cellular communication enabled device and the connectivity server are attached to a same network of the mobile operator. An example embodiment comprises performing 430. by the connectivity server verifying the information relating to the cellular communication enabled device. In an example embodiment, the connectivity server performs 432. verifying the information relating to the cellular communication enabled device using the Internet address of the cellular communication enabled device to look up at least one subscriber identifier of the mobile subscription.

The method may further comprise forming 434. the network subscription, e.g. comprising establishing a shared secret. The forming of the mobile communication network subscription may comprise storing the shared secret in a subscriber module. The subscriber module may be physical. Alternatively, the subscriber module may be an electric subscriber module that is remotely configured. The remotely configuring of the in the subscriber module may be performed when the cellular communication enabled device communicates with the mobile network using the network subscription.

The method may further comprise establishing 436. the subscription identifier on forming the mobile communication network subscription such that the subscription identifier is unique in the mobile communication network. The subscription identifier may be an identifier that is cryptographically protected or not to be transmitted from the cellular communication enabled device.

Various implementation alternatives are next described.

In order to perform the storing 400 of the association between the mobile subscription of a mobile communication network of a mobile operator and a subscription owner, the in an example embodiment, the identity of the Enterprise is associated with the subscription prior to the cellular communication enabled device 120 connecting to the mobile network 130. The Enterprise (or other party) will have secure access to this relationship and it cannot be shared with other unauthorized Enterprise or parties. This can be done in a number of ways, such as:
a. a 3GPP MSISDN or other non 3GPP phone number is allocated to the Enterprise;
b. a 3GPP External-id is allocated to the Enterprise;
c. a 3GPP IMEI that is allocated to the Enterprise, normally this is not used as it is not as secure as other identifiers;
d. a 3GPP Access Point Name that is private to the Enterprise;
e. an IP Address of the subscription, that can be relied up, such as a static IP, that is applied to the Enterprise; and/or
f. other non 3GPP identifiers that are allocated to the Enterprise.

In an example embodiment, a subscriber identity module is associated with the subscription is inserted into the cellular communication enabled device 120 ("Device") or if the Device uses an electronic subscriber identity module, then that is activated in the Device. The Device then establishes connectivity to the cellular network.

In an example embodiment, a URL or IP address or other network address is provided pointing to the connectivity server 140. In an embodiment, the connectivity server 140 is discoverable by the Device using an internet connectivity configuration protocol. The internet connectivity configuration protocol may be or comprise a dynamic host configuration protocol, such as the DHCP. Alternatively or additionally, the internet connectivity configuration protocol may be or comprise a domain name system protocol, such as the DNS protocol.

On providing a network address or pointer by the internet connectivity configuration protocol, the network reports in an example embodiment an IP addresses and at least one subscription identifier for retaining by or accessible to the connectivity server 140.

For detecting whether the cellular communication enabled device transmitted the request of step 404, in an example embodiment the Device establishes a connection to the connectivity server 140. To ensure that the Device is directed to the correct server, the Device may only perform this if the network of the subscription is the same as the network attached to. The connectivity server 140 use in an example embodiment the source IP address to look up the Subscription Identifiers and therefore determine the ownership of the Device.

In an example embodiment, credentials are coordinated with a secure system or other restricted network resource 150. In an example embodiment, a random value is generated and shared by the Device and the secure system. Another example employs retrieving the credentials from the secure system or other means.

The connectivity server 140, when implemented to function as a provisioning server, may provision the Device with the credentials to allow secure access to one or more systems, such as the restricted network resource 150. Armed with the credentials, the Device can then connect to the restricted network resource 150.

In another example embodiment in which the connectivity server functions for the Device as a routing or gateway function, traffic is securely routed through the connectivity server 140 between the Device and the restricted network resource 150.

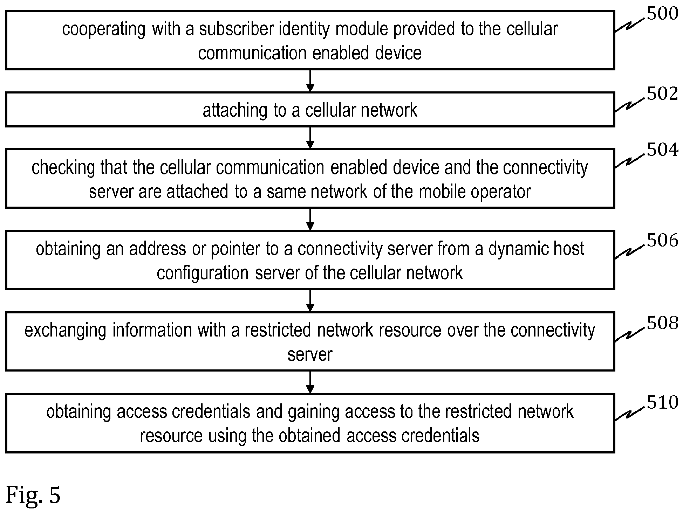

Fig. 5 shows a method of an example embodiment in the cellular communication enabled device 120, comprising:
500. cooperating with a subscriber identity module provided to the cellular communication enabled device;
502. attaching to a cellular network;
504. obtaining an address or pointer to a connectivity server from a dynamic host configuration server of the cellular network;
506. requesting connectivity from the connectivity server using the address or pointer; and
508. exchanging information with a restricted network resource over the connectivity server or 510. obtaining access credentials and gaining access to the restricted network resource using the obtained access credentials.

In this document, the processor comprises, for example, one or more items selected from: a master control unit (MCU); a microprocessor; a digital signal processor (DSP); an application specific integrated circuit (ASIC); a field programmable gate array; and a microcontroller. The processor may also be partly implemented using distributed circuitries, parts or functionalities and/or using cloud computing.

As used in this application, the term "circuitry" may refer to one or more or all of the following:
(a) hardware-only circuit implementations (such as implementations in only analog and/or digital circuitry) and;
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is that cellular communication enabled devices can be provisioned without need to pre-store to such devices any location or pointer to a provisioning server. Another technical effect of one or more of the example embodiments disclosed herein is that same subscriber identity modules can be used for different subscription owners while still provisioning associated devices owner specifically. Yet another technical effect of one or more of the example embodiments disclosed herein is that computationally heavy certificate exchange protocols and other demanding security protocols such as the TLS may be avoided. Yet another technical effect of one or more of the example embodiments disclosed herein is that the subscriber identity modules can be used with any number of devices to be provisioned without constraints caused, e.g., by memory or size of the subscriber identity modules. Yet another technical effect of one or more of the example embodiments disclosed herein is that any modern and likely all future mobile communication networks may also be used to implement the invention without need to change a radio access interface, home location register, mobility management or other standardized functionalities that are difficult to change.

Embodiments of the present invention may be implemented in software, hardware, application logic or a combination of software, hardware and application logic. The software, application logic and/or hardware may reside on the cellular communication enabled device 120or the apparatus 300. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 2 or 3. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. Network equipment comprising at least one memory and processor configured to perform:
storing an association between a mobile subscription of a mobile communication network of a mobile operator and a subscription owner;
detecting a request from a cellular communication enabled device for providing data connectivity to a restricted network resource to which the subscription owner is authorized to access; and
detecting whether the cellular communication enabled device transmitted the request using the subscription for which the association was stored between the mobile subscription and the subscription owner; and if yes, providing the data connectivity to the restricted network resource, otherwise not providing the data connectivity to the restricted network resource.

2. The network equipment of claim 1, the at least one memory and processor being further configured to store the association by storing a subscription identifier unique to the subscription in connection with an identification of the subscription owner.

3. The network equipment of claim 1 or 2, wherein the providing of the data connectivity to the restricted network resource comprises provisioning the cellular communication enabled device with access credentials.

4. The network equipment of any one of preceding claims, wherein the providing of the data connectivity to the restricted network resource comprises routing traffic from the cellular communication enabled device to the restricted network resource.

5. The network equipment of any one of preceding claims, the at least one memory and processor being further configured to receive a dynamic host configuration request and provide the cellular communication enabled device with an address of a connectivity server in response to receiving the dynamic host configuration request.

6. The network equipment of any one of preceding claims, the at least one memory and processor being further configured to provide an address of the connectivity server or a pointer thereto in a dynamic host configuration response.

7. The network equipment of any one of preceding claims, the at least one memory and processor being further configured to provide the connectivity server with information particular relating to the cellular communication enabled device.

8. The network equipment of claim 7, wherein the information relating to the cellular communication enabled device comprises a current IP address assigned to the mobile subscription.

9. The network equipment of claim 7, wherein the information relating to the cellular communication enabled device comprises the subscription identifier unique to the subscription that is associated with the cellular communication enabled device.

10. The network equipment of any one of the preceding claims, further configured to cause the connectivity server to perform the detecting of a request from the cellular communication enabled device for providing data connectivity to the restricted resource.

11. The network equipment of any one of claim 10, further configured to cause the connectivity server to perform the detecting whether the cellular communication enabled device transmitted the request using the subscription for which the association was stored between the mobile subscription.

12. The network equipment of any one of the preceding claims, further configured to cause the connectivity server to check that the cellular communication enabled device and the connectivity server are attached to a same network of the mobile operator.

13. The network equipment of any one of the preceding claims, further configured to cause the connectivity server to verify the information relating to the cellular communication enabled device using the Internet address of the cellular communication enabled device to look up at least one subscriber identifier of the mobile subscription.

14. A method comprising:
storing an association between a mobile subscription of a mobile communication network of a mobile operator and a subscription owner;
detecting a request from a cellular communication enabled device for providing data connectivity to a restricted network resource to which the subscription owner is authorized to access; and
detecting whether the cellular communication enabled device transmitted the request using the subscription for which the association was stored between the mobile subscription and the subscription owner; and if yes, providing the data connectivity to the restricted network resource, otherwise not providing the data connectivity to the restricted network resource.

15. A cellular communication enabled device comprising:
means for cooperating with a subscriber identity module provided to the cellular communication enabled device;
means for attaching to a cellular network;
means for obtaining an address or pointer to a connectivity server from an internet connectivity configuration server of the cellular network;
means for requesting connectivity from the connectivity server using the address or pointer; and
means for exchanging information with a restricted network resource over the connectivity server or obtaining access credentials and gaining access to the restricted network resource using the obtained access credentials.
